# FASCICULE DE BREVET EUROPEEN

(11) **EP 3 800 777 B1**
(45) Date de publication et mention de la délivrance du brevet: **28.10.2026**
(21) Numéro de dépôt: 20198843.3
(22) Date de dépôt: 29.09.2020
(51) Int. Cl.: H02P 9/10, H02J 3/40, H02J 3/38, H02J 3/001

(54) **MODIFICATION DES VALEURS DE PARAMÈTRES DE LA LOI DE COMMANDE D'UN GÉNÉRATEUR**
ÄNDERUNG DER PARAMETERWERTE DES STEUERGESETZES EINES GENERATORS
MODIFICATION OF PARAMETER VALUES OF THE LAW FOR CONTROLLING A GENERATOR

(30) Priorité: 02.10.2019 FR 1910910
(43) Date de publication de la demande: 07.04.2021
(73) Titulaire: Schneider Electric Industries SAS, 92500 Rueil Malmaison (FR); Institut Polytechnique de Grenoble, 38000 Grenoble (FR)
(72) Inventeur: MOULICHON, Audrey, 38000 GRENOBLE (FR); ALAMIR, Mazen, 38400 SAINT MARTIN D'HERES (FR); GARBUIO, Lauric, 38950 SAINT MARTIN LE VINOUX (FR); RAHMANI, Mustapha Amine, 38400 SAINT MARTIN D'HERES (FR); GUALINO, David, 38330 SAINT ISMIER (FR); DEBUSSCHERE, Vincent, 38000 GRENOBLE (FR); HADJ-SAID, Nouredine, 38000 GRENOBLE (FR); WANG, Miao-Xin, 38330 MONTBONNOT SAINT MARTIN (FR)
(74) Mandataire: Santarelli

(56) Documents cités:
- CN-A- 108 376 998
- CN-A- 109 873 446
- PIMPRIKAR TEJASHREE ET AL: "Virtual Synchronous Generator- A New Trend in Technology for Smart Grid Integration", 2018 INTERNATIONAL CONFERENCE ON INFORMATION , COMMUNICATION, ENGINEERING AND TECHNOLOGY (ICICET), IEEE, 29 August 2018 (2018-08-29), pages 1 - 5, XP033446635, DOI: 10.1109/ICICET.2018.8533823
- SAKIMOTO K ET AL: "Stabilization of a power system with a distributed generator by a Virtual Synchronous Generator function", POWER ELECTRONICS AND ECCE ASIA (ICPE&ECCE), 2011 IEEE 8TH INTERNATIONAL CONFERENCE ON, IEEE, 30 May 2011 (2011-05-30), pages 1498 - 1505, XP031956088, ISBN: 978-1-61284-958-4, DOI: 10.1109/ICPE.2011.5944492

## Description

### DOMAINE TECHNIQUE

La présente invention concerne un procédé de commande d'un générateur.

L'invention concerne également un générateur mettant en œuvre un tel procédé.

### TECHNIQUE ANTERIEURE

Un micro réseau (appelé « microgrid » en anglais) est généralement un réseau électrique local destiné à produire et à distribuer de l'énergie électrique dans des zones généralement isolées et distantes des grands centres de production d'énergie électrique.

De telles régions isolées sont par exemple des îles, des régions montagneuses, ou encore des régions désertiques.

Le principe de micro réseau s'applique également lorsqu'un bâtiment, un ensemble de bâtiments, ou toute autre entité connectée à un large réseau de distribution souhaite gérer, au moins en partie, sa production d'énergie elle-même.

Le principal intérêt des micro réseaux est ainsi qu'ils fonctionnent de manière autonome et se trouvent à proximité des zones de consommation (appelées également « charges »). Ainsi, les pertes inhérentes aux réseaux de distribution longues distances sont limitées.

L'autonomie énergétique du micro réseau est généralement assurée par une ou plusieurs sources d'énergies électrique de différents types, parmi lesquelles des sources d'énergie renouvelable, telles que des sources d'énergie photovoltaïque ou éolienne.

Afin de fournir l'énergie électrique au micro réseau, un générateur comprend au moins la source électrique d'énergie électrique et un onduleur.

La source électrique produit une puissance électrique en générant une tension et un courant continus. Les tension et courant continus sont ensuite convertis par l'onduleur en une tension et un courant alternatifs.

L'onduleur peut être asservi selon une loi de commande statique de manière à émuler le comportement d'un générateur. On parle alors de générateur virtuel. Il est ainsi possible de connecter électriquement des générateurs virtuels en parallèle avec d'autres générateurs sur le micro réseau.

Un tel générateur virtuel peut néanmoins, sous certaines conditions, être confronté à des instabilités, notamment en cas de court-circuit ou de faible courant circulant sur le micro réseau.

En particulier, de tels courts-circuits peuvent se produire lors de plusieurs évènements impactant le micro réseau, par exemple lorsqu'un exercice de maintenance entraine une rupture inopinée d'un câble sur le micro réseau.

La loi de commande peut alors ne pas suffire pour piloter de façon efficace les valeurs électriques en sortie du générateur.

Afin de pallier ce problème, les documents WO 2012116559 A1 et « Virtual Synchronous Generators for microgrid stabilization : Modeling, implementation and experimental validation on a microgrid laboratory », Rahmani et al., IEEE 2017 Asian Conference on Energy, Power and Transportation Electrification, prévoient par exemple des impédances, dites impédances virtuelles, afin de garantir une meilleure stabilité de l'onduleur.

Selon un autre exemple, le document FR 1858434 prévoit que la loi de commande comprend des boucles d'intégration et de correction afin d'ajuster les valeurs électriques en sortie de l'onduleur.
CN 108 376 998 divulgue un procédé d'analyse et de contrôle de stabilité transitoire de défaut symétrique qui prend en compte les caractéristiques de saturation d'une machine virtuelle synchrone. L'article « Virtual Synchronous Generator - A New Trend in Technology for Smart Grid Integration", de Pimprikar Tejashree et AI (ICICET), divulgue un générateur synchrone virtuel.

Toutefois, bien que pouvant s'avérer généralement satisfaisantes, de telles méthodes peuvent s'avérer insuffisantes, notamment lorsque les instabilités sur le réseau se révèlent être d'une durée particulièrement courte et/ou d'une amplitude trop élevée.

Aussi, les surtensions ou surintensité en découlant sont susceptibles de dégrader le générateur, et notamment l'onduleur.

Lorsque l'instabilité survient, et afin de protéger le générateur, une solution actuellement mise en œuvre est de temporairement déconnecter l'onduleur du micro réseau.

Cependant, une telle déconnexion a pour inconvénient de ne pas permettre la distribution d'électricité provenant la source d'énergie électrique. Cela nécessite ensuite un redémarrage du générateur. En outre, et en particulier dans le cadre d'un micro réseau, une telle déconnexion peut déstabiliser davantage le micro réseau, créant de nouvelles instabilités potentiellement dommageables pour les autres générateurs qui y sont connectés.

Un des buts de l'invention est donc de trouver un procédé de commande du générateur, et un générateur, simple, fiable et économique qui permet d'améliorer la résolution des problèmes liés à la survenance d'instabilité.

### Résumé

L'invention vient améliorer la situation.

Il est proposé un procédé de commande d'un générateur tel que défini dans les revendications.

Grâce à ces dispositions, il est possible d'améliorer les performances du générateur par rapport à un générateur piloté par une loi de commande statique. En particulier, le générateur permet d'obtenir des valeurs électriques de sortie satisfaisantes, notamment en cas d'instabilité sur le réseau de distribution électrique.

Les caractéristiques exposées dans les paragraphes suivants peuvent, optionnellement, être mises en œuvre. Elles peuvent être mises en œuvre indépendamment les unes des autres ou en combinaison les unes avec les autres :
Selon une réalisation, si la valeur de sortie cible est inférieure ou égale à la valeur maximale admissible, conserver la valeur fixée du paramètre de la loi de commande.

Selon une autre réalisation, les étapes du procédé sont répétées de façon périodique, la loi de commande comprend lors de l'itération suivante k+1 du procédé la valeur déterminée du paramètre lors de l'itération précédente k.

Selon une autre réalisation, les étapes du procédé sont répétées à une fréquence supérieure à 1kHz, voire à 5 kHz.

Selon une autre réalisation, la valeur de sortie cible est déterminée au moyen de la loi de commande en fonction d'au moins une valeur électrique de sortie mesurée aux bornes du générateur.

Selon une autre réalisation, la détermination de la valeur modifiée du paramètre est effectuée de sorte à minimiser un écart entre la valeur modifiée et la valeur fixée dudit paramètre.

Selon une autre réalisation, la détermination de la valeur du paramètre modifiée est effectuée de sorte à minimiser un écart entre les valeurs modifiées du paramètre obtenues lors de deux itérations successives k, k+1 des étapes du procédé.

Selon une autre réalisation, la valeur électrique de sortie est choisie parmi une valeur d'intensité(I_{abc}), une valeur de tension et une valeur de fréquence.

Selon une autre réalisation, le procédé est configuré pour contrôler la valeur électrique de sortie du générateur lorsque de la survenance d'une instabilité sur le réseau de distribution électrique.

Selon un autre aspect, il est proposé un programme d'ordinateur comprenant des instructions qui, lorsque le programme est exécuté par un processeur, conduisent à mettre en œuvre le procédé selon l'invention.

Selon un autre aspect, il est proposé un support d'enregistrement non transitoire lisible par un processeur sur lequel est enregistré un programme pour la mise en œuvre du procédé selon l'invention.

Selon un autre aspect, il est proposé un générateur tel que défini dans les revendications.

Selon une réalisation, le générateur est configuré pour délivrer des valeurs électriques de sortie à un micro réseau.

Selon une autre réalisation, la source d'énergie électrique est une source d'énergie renouvelable.

### BREVE DESCRIPTION DES DESSINS

D'autres caractéristiques, détails et avantages apparaîtront à la lecture de la description détaillée ci-après, et à l'analyse des dessins annexés, sur lesquels :
**Fig. 1**

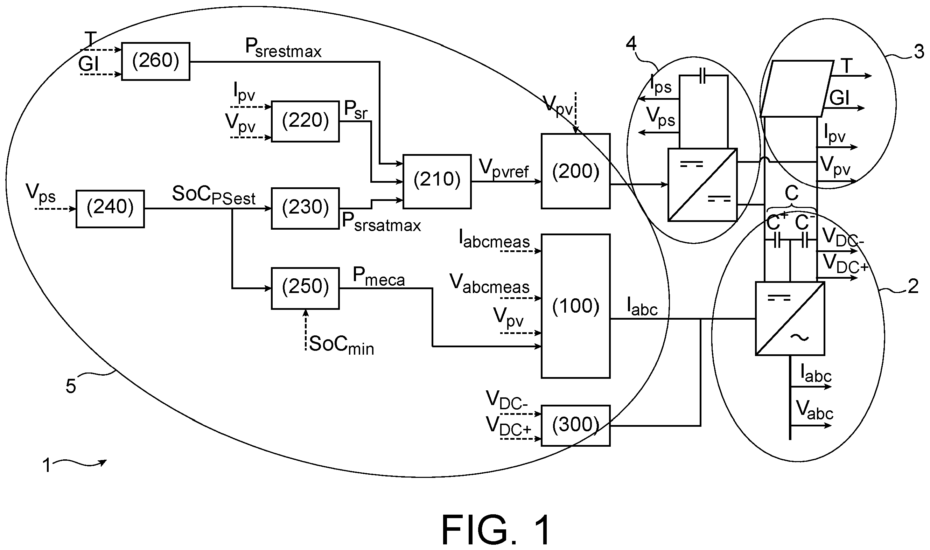

   [Fig. 1] est une représentation schématique d'un générateur virtuel déjà connu de l'état de la technique.
**Fig. 2**

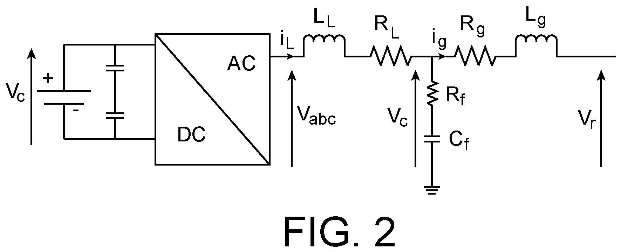

   [Fig. 2] est une représentation d'un schéma électrique équivalent de la connexion de l'onduleur au réseau de distribution électrique.
**Fig. 3**

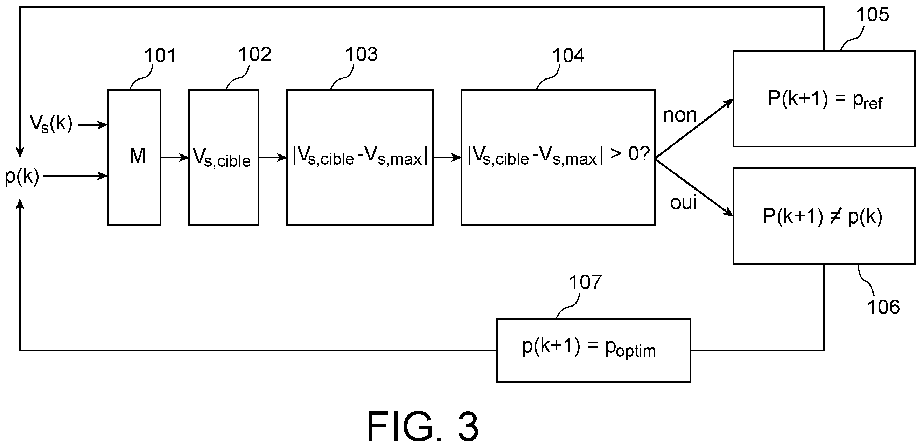

   [Fig. 3] est une représentation schématique du procédé de commande selon la présente invention.
**Fig. 4**

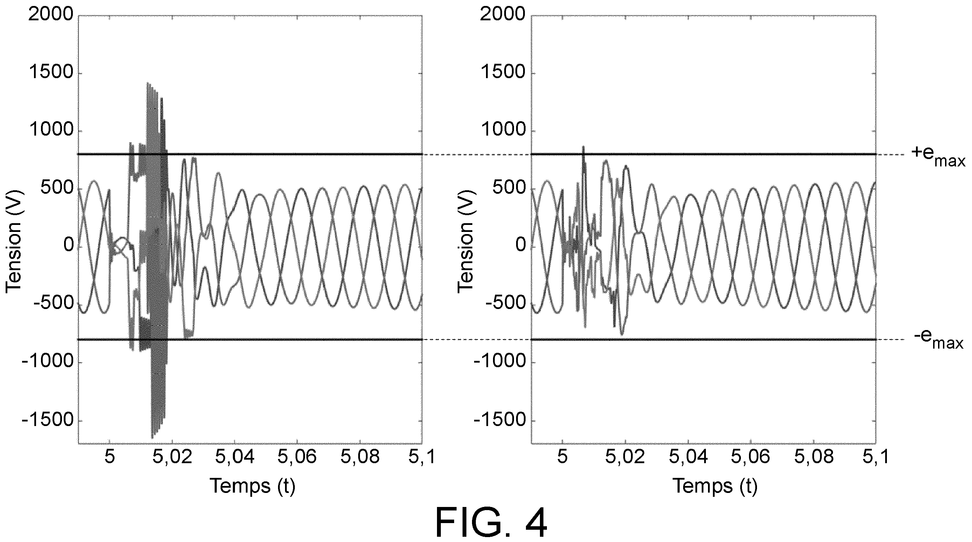

   [Fig. 4] est une représentation des valeurs de tension d'un générateur virtuel triphasé connu de l'état de la technique à la suite d'un court-circuit sur le réseau de distribution électrique (à gauche) et des valeurs de tension d'un générateur virtuel triphasé selon l'invention à la suite du même court-circuit sur le réseau de distribution électrique (à droite).
**Fig. 5**

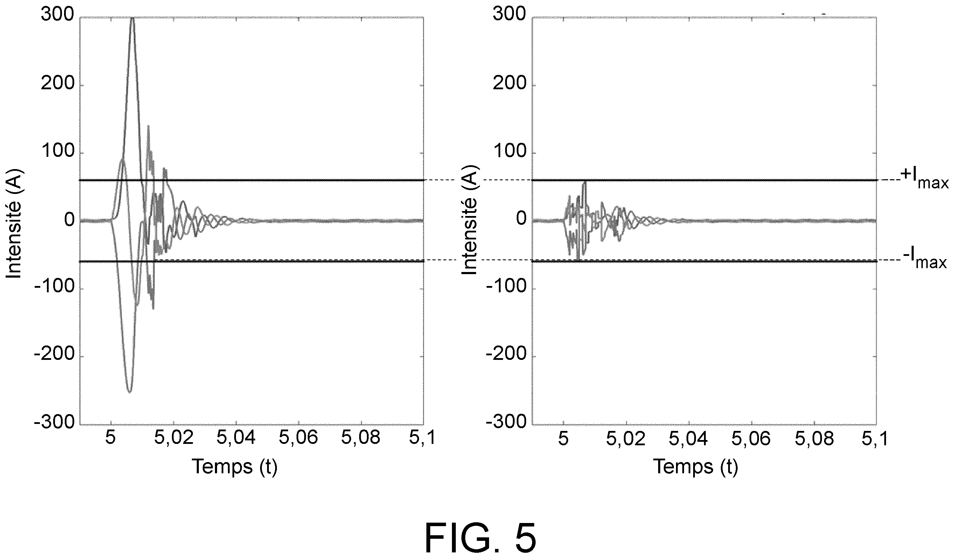

   [Fig. 5] est une représentation des valeurs d'intensité d'un générateur virtuel triphasé connu de l'état de la technique à la suite d'un court-circuit sur le réseau de distribution électrique (à gauche) et des valeurs d'intensité d'un générateur virtuel triphasé selon l'invention à la suite du même court-circuit sur le réseau de distribution électrique (à droite).

### DESCRIPTION DES MODES DE REALISATION

Les dessins et la description ci-après contiennent, pour l'essentiel, des éléments de caractère certain. Ils pourront donc non seulement servir à mieux faire comprendre la présente divulgation, mais aussi contribuer à sa définition, le cas échéant.

### Générateur

La [Fig. 1] illustre de façon schématique un générateur virtuel, notamment synchrone, selon l'invention (appelé « Synchronous Virtual Generator » en anglais).

Par « générateur virtuel », on entend un générateur se comportant comme un dispositif autonome capable de produire de l'électricité.

Un tel générateur virtuel est représenté par la [Fig. 1].

Bien que décrite dans le contexte d'un générateur virtuel particulier, l'invention ne doit toutefois pas être limitée à cet aspect. En particulier, tout générateur destiné à délivrer sur un réseau de distribution électrique un courant et une tension, notamment alternative, est envisageable.

Le réseau de distribution électrique peut être un micro réseau ou un réseau de distribution électrique traditionnel. Le générateur 1 est alors configuré pour former le réseau (appelé « grid forming » en anglais).

Le générateur 1 comprend au moins un onduleur 2 et une source d'énergie électrique 3.

L'onduleur 2 est configuré pour être connecté et pour délivrer à un réseau de distribution électrique des valeurs électriques de sortie V_{S}. Les valeurs électriques de sortie V_{S} sont notamment une tension alternative V_{abc}, une intensité alternative I_{abc}, toutes deux présentant une fréquence f_{abc}. Les valeurs électriques de sortie V_{S} peuvent également comprendre une puissance active P_{abc} et réactive Q_{abc}.

Les valeurs électriques de sortie V_{S} sont le résultat d'une conversion par l'onduleur 2 de valeurs électriques d'entrée V_{E}. Les valeurs électriques d'entrée V_{E} sont notamment une tension continue V_{c} et un courant continu I_{c} produits par la source d'énergie électrique 3.

L'onduleur 2 est pourvu d'interrupteurs électroniques qui, commandés sur la base de rapports cycliques, dits rapports cycliques instantanés α_{abc}, permet de délivrer les valeurs électriques de sortie V_{S} au réseau de distribution électrique.

Les interrupteurs électroniques peuvent par exemple comprendre des transistors bipolaires à grille isolée (appelés « IGBT » ou « Insulated Gate Bipolar Transistor » en anglais).

La source d'énergie électrique 3 peut être une source d'énergie renouvelable comprenant par exemple des panneaux photovoltaïques, des éoliennes, des hydroliennes, des machines thermodynamiques. D'autres types de sources électrique renouvelables sont également possibles.

La source d'énergie renouvelable 3 peut être soumise aux aléas climatiques, et par conséquent être une source d'énergie instable et intermittente.

Le générateur 1 peut également comprendre un système d'accumulation 4 de puissance et/ou d'énergie, tel qu'une batterie ou autres.

### Loi de commande

Afin d'ajuster et optimiser les valeurs électriques de sortie V_{S} délivrées au réseau de distribution électrique, le générateur 1, notamment l'onduleur 2, est piloté par une loi de commande 5.

La loi de commande 5 est mise en œuvre par des moyens informatiques tels qu'un ordinateur, un calculateur, un processeur ou encore une carte de contrôle.

La loi de commande 5 est configurée pour permettre une adéquation entre la puissance électrique générée par la source d'énergie électrique 3 et la puissance consommée par le réseau de distribution électrique.

La loi de commande 5 est également configurée pour permettre au générateur 1 de répondre à un appel de charge sur le réseau de distribution électrique et/ou à une fluctuation de la production d'électricité par la source d'énergie électrique 3.

Par « appel de charge », on comprend notamment une variation de la puissance consommée par une charge sur le réseau de distribution électrique. A titre d'exemple non limitatif, une charge peut être un équipement industriel (par exemple une usine et ses machines), un équipement domestique, un mobilier urbain au réseau de distribution électrique, des bornes de recharge électriques, ou autres.

Selon une réalisation, la loi de commande 5 est configurée pour que le générateur 1 émule ainsi le comportement d'un générateur synchrone.

Par « générateur synchrone », on comprend un générateur qui produit un courant électrique dont la fréquence est déterminée par la vitesse de rotation d'une partie mobile (rotor) par rapport à une partie fixe (stator).

A cet effet, et en référence à la [Fig. 1] (figure 1a du document EP 3208907), la loi de commande 5 peut comprendre différents blocs. En particulier, la loi de commande 5 comprend un bloc de commande 100.

Le bloc de commande 100 est configuré pour déterminer des valeurs de commande permettant de piloter l'onduleur 2 afin que les valeurs électriques de sortie V_{S} soient égales à, ou proches de, valeurs de sortie cibles V_{S,cible}. Des valeurs de sortie cibles V_{S,cible} peuvent donc être des valeurs électriques de l'onduleur 2.

L'onduleur 2 peut ainsi délivrer des valeurs électriques de sortie V_{S} adaptée au réseau de distribution électrique.

### Procédé

La loi de commande 5 comprend la résolution des équations différentielles électromécaniques permettant de modéliser le fonctionnement du générateur virtuel ainsi que sa connexion au réseau de distribution électrique. L'utilisation de la loi de commande 5 nécessite le développement d'un programme d'ordinateur (ou d'un algorithme) basé sur ces équations différentielles.

A titre purement illustratif, on décrit ci-après des équations permettant de modéliser le fonctionnement d'un générateur virtuel synchrone selon une modélisation particulière connue de l'homme du métier. Bien entendu, l'invention n'est pas limitée à ce modèle, d'autres modèles également connus en soi pouvant être utilisés pour établir la loi de commande 5.

On utilise dans la suite les symboles indiqués dans le tableau ci-dessous permettant de modéliser le générateur virtuel synchrone :

**[Table 1]**

| Variable | Définition |
|---|---|
| *ψ_{d}* | Flux stator sur l'axe d du générateur virtuel synchrone |
| *ψ_{q}* | Flux stator sur l'axe q du générateur virtuel synchrone |
| *ψ_{fd}* | Flux rotor sur l'axe d du générateur virtuel synchrone |
| *i_{d}* | Courant de sortie sur l'axe d du générateur virtuel synchrone |
| *i_{q}* | Courant de sortie sur l'axe q du générateur virtuel synchrone |
| *ω_{base}* | Vitesse de rotation de référence du générateur virtuel synchrone |
| *Rₐ* | Résistance statorique du stator du générateur virtuel synchrone |
| ${L}_{d}^{′}$ | Inductance transitoire sur l'axe d du stator du générateur virtuel synchrone |
| *L_{d}* | Inductance permanente sur l'axe d du stator du générateur virtuel synchrone |
| *L_{q}* | Inductance permanente sur l'axe q du stator du générateur virtuel synchrone |
| ${T}_{do}^{′}$ | Temps transitoire en boucle ouverte du générateur virtuel synchrone |

La modélisation fait appel à la transformée dq0 concernant les machines synchrones et les onduleurs triphasés. Selon cette modélisation, les flux d'un générateur synchrone peuvent être décrit selon des axes d et q de la façon suivante :
[Math. 1] $\begin{matrix}{\dot{ψ}}_{d} = {ω}_{base} ⋅ \left[{e}_{d}+{ω}_{r}.{ψ}_{q}-{R}_{a}.\frac{1}{{L}_{d}^{′}}.{ψ}_{d}+{R}_{a}.\left(\frac{1}{{L}_{d}^{′}}-\frac{1}{{L}_{d}}\right).{ψ}_{fd}\right] \\ {\dot{ψ}}_{q} = {ω}_{base} . \left[{e}_{q}-{ω}_{r}.{ψ}_{d}-{R}_{a}.\frac{1}{{L}_{q}}.{ψ}_{q}\right] \\ {\dot{ψ}}_{fd} = {ω}_{base} . \left[{e}_{fd}+\frac{{L}_{d}}{{T}_{do}^{′} . {L}_{d}^{′}}.{ψ}_{d}-\frac{{L}_{d}}{{T}_{do}^{′} . {L}_{d}^{′}}.{ψ}_{fd}\right]\end{matrix}$

En outre, le courant de sortie du générateur virtuel synchrone peut être décrit selon les axes d et q de la façon suivante :
[Math. 2] $\begin{matrix}{i}_{d} = - \frac{1}{{L}_{d}^{′}} . {ψ}_{d} + \left(\frac{1}{{L}_{d}^{′}}-\frac{1}{{L}_{d}}\right) . {ψ}_{fd} \\ {i}_{q} = - \frac{1}{{L}_{q}} . {ψ}_{q}\end{matrix}$

La modélisation peut également faire appel notamment aux caractéristiques du réseau de distribution électrique et de l'onduleur 2. Ces caractéristiques du réseau de distribution sont imposées et non modifiables. On utilise alors les symboles indiqués dans le tableau ci-dessous en lien avec la [Fig. 2] :

**[Table 2]**

| Variable | Définition |
|---|---|
| ***V_{c}*** | Tension du réseau unifilaire filtrée |
| ***Vᵣ*** | Tension du réseau unifilaire |
| ***L_{L}*** et ***R_{L}*** | Impédance et résistance de l'onduleur |
| ***Lᵣ*** et ***Rᵣ*** | Impédance et résistance du réseau |
| ***C_{f}*** et ***R_{f}*** | Capacitance et résistance du filtre de sortie |

On obtient ainsi des paramètres permettant la modélisation du générateur virtuel synchrone et de sa connexion avec le réseau de distribution électrique.

Comme indiqué dans les équations ci-dessus, une loi de commande comprend usuellement des valeurs fixées p_{ref} de paramètres modélisant le générateur virtuel, correspondant ici à R_{α}, L'_{d}, L_{d}, L_{q}, T'_{do}. On parle alors de loi de commande statique. Le nombre de paramètres de la loi de commande peut bien entendu être plus ou moins élevé, étant entendu qu'il existe des modélisations plus ou moins complexes pouvant être utilisées.

Par « valeurs fixées de paramètres d'une loi de commande statique », on entend des valeurs déterminées lors de l'établissement de la loi de commande et invariables par la suite dans le temps, notamment lors du fonctionnement du générateur.

Comme connu de l'état de la technique, une telle loi de commande 5 permet ainsi d'obtenir une relation pouvant être simplifié de la façon suivante :
[Math. 3] ${V}_{S , cible} \left(k+1\right) = M \left[{p}_{ref},{V}_{S}\left(k\right)\right]$

M correspond à la modélisation correspondant notamment à la résolution des équations différentielles prises en compte, p_{ref} correspond aux valeurs de fixées paramètres de la loi de commande statique et V_{S} correspond aux valeurs électriques de sortie de l'onduleur 2 à l'instant k.

Bien entendu, la loi de commande 5 peut également prendre en compte d'autres valeurs, notamment électriques, qui ne sont pas décrites ici par souci de simplification. A titre d'exemple, la loi de commande 5 peut également prendre en compte les valeurs de tension continue V_{c} et de courant continu I_{c} de la source d'énergie électrique 3, ou encore toute autres valeurs.

Il est ainsi possible de déterminer les valeurs de sortie cibles V_{S,cible} pour piloter l'onduleur à l'instant k+1 en fonction des valeurs fixées p_{ref} des paramètres et des valeurs électriques de sortie V_{S} mesurées à l'instant k.

La prise en compte des valeurs électriques de sortie V_{S} permet ainsi de détecter en continue les fluctuations se produisant sur le réseau de distribution électrique, et d'adapter en temps réel ces valeurs en fonction des valeurs de sortie cibles V_{S,cible} déterminées par la loi de commande et faisant office de valeur consigne de l'onduleur 2.

Toutefois, une loi de commande statique avec de telles valeurs fixées p_{ref} peut s'avérer insatisfaisante lorsqu'il s'agit de piloter le générateur 1 lors de certaines instabilités, notamment de courte durée et/ou d'amplitude élevée.

Par « instabilité de courte durée », on entend un régime divergent provisoire, entrainant un état instable différent de l'état stable acceptable et usuel du générateur 1. Une instabilité peut notamment avoir une durée inférieure à à 20 millisecondes, voire inférieure à 10 secondes, voire inférieure à 5 millisecondes.

A titre d'exemple, une instabilité peut notamment survenir lorsque le générateur 1 ne produisant pas de courant produit passe très rapidement à une production d'une puissance maximale. Une instabilité peut également survenir lors d'un court-circuit entrainant une chute de la tension nominale V_{abc} à 0 (ou proche de 0) en quelques secondes.

Ainsi, le procédé de commande selon l'invention permet de modifier les valeurs des paramètres de la loi de commande 5 dans le temps. On parle alors de loi de commande dynamique, contrairement à une loi de commande statique. Les valeurs des paramètres ne sont plus alors plus nécessairement égales aux valeurs fixées p_{ref} de la loi de commande statique.

La modification des valeurs des paramètres de la loi de commande 5 permet ainsi de déterminer des valeurs électriques de sortie V_{S} acceptables en s'affranchissant des limites inhérentes à la modélisation du fonctionnement du générateur virtuel lorsque des instabilités apparaissent sur le réseau de distribution électrique.

Le procédé de commande selon l'invention est plus particulièrement décrit en lien avec la [Fig. 3].

Selon une étape 101, la loi de commande 5 est mise en œuvre. La loi de commande 5 prend notamment en compte des mesures des valeurs électriques de sortie V_{S}(k) du générateur 1. Plus particulièrement, ces valeurs électriques de sortie V_{S}(k) sont mesurées à un instant k aux bornes de sortie de l'onduleur 2.

Selon une étape 102, on détermine ainsi à partir de la loi de commande 5 les valeurs de sortie cibles V_{S,cible}(k+1) que l'onduleur 2 doit effectivement délivrer au réseau de distribution électrique à un instant k+1.

Ces valeurs électriques de sortie cibles V_{S,cible} ne doivent pas entrainer de surtension ou de surintensité du générateur 1, susceptibles de dégrader sinon son fonctionnement.

Aussi, selon une étape 103, on détermine si les valeurs de sortie cibles V_{S,cible} ne sont pas susceptibles de dépasser des valeurs maximales admissibles V_{S,max}. Plus particulièrement, les valeurs maximales admissibles V_{S,max} sont des valeurs maximales d'utilisation propres au générateur 1, et notamment à l'onduleur 2, inhérentes à ses caractéristiques électriques de construction et de fonctionnement.

Selon une réalisation, on compare ainsi dans l'étape 103 les valeurs de sortie cibles V_{S,cible} par rapport aux valeurs maximales admissibles V_{S,max}.

Selon une réalisation plus particulièrement décrite dans la suite, les valeurs de sortie cibles V_{S,cible} peuvent comprendre la tension alternative V_{abc} (correspondant aux valeur e_{q} et e_{q} suivant les axes d et q de la transformée dq0), l'intensité alternative I_{abc} (correspondant aux valeurs i_{d} et i_{q} suivant les axes d et q de la transformée dq0) et le rapport cyclique α_{abc} (correspondant aux valeur α_{d} et α_{q} suivant les axes d et q de la transformée dq0),

Selon cette réalisation, les valeurs maximales admissibles V_{S,max} peuvent alors comprendre notamment la valeur maximale de courant admissible par l'onduleur en sortie Iₘₐₓ, la valeur maximale admissible du rapport cyclique par l'onduleur en sortie αₘₐₓ et/ou la valeur maximale de tension admissible par l'onduleur en sortie eₘₐₓ.

Des dépassements Vₑ, Vᵢ, V_{α} peuvent être déterminés, en calculant par exemple la différence entre les valeurs absolues respectivement des valeurs de sortie cibles V_{S,cible} et des valeurs maximales V_{S,max}, de la façon suivante :
[Math. 4] $\begin{matrix}{V}_{e} \left(k\right) = \sqrt{{e}_{d} {\left(k\right)}^{2} + {e}_{q} {\left(k\right)}^{2}} - {e}_{max} \\ {V}_{i} \left(k\right) = \sqrt{{i}_{d} {\left(k\right)}^{2} + {i}_{q} {\left(k\right)}^{2}} - {i}_{max} \\ {V}_{α} \left(k\right) = \sqrt{{e}_{α} {\left(k\right)}^{2} + {e}_{α} {\left(k\right)}^{2}} - {α}_{max}\end{matrix}$

D'autres méthodes de calcul des dépassements sont possibles, étant entendu que ce terme désigne la distance mathématique entre les valeurs comparées.

Dans une étape 104, on détermine si au moins un dépassement Vₑ, Vᵢ, V_{α} entre les valeurs de sortie cibles V_{S,cible} et les valeurs maximales admissibles V_{S,max} est supérieur ou inférieur à 0.

Si tous les dépassements calculés sont inférieurs, voire égaux à 0, cela signifie qu'aucune valeur électrique de sortie V_{S} n'est susceptible de dépasser les valeurs maximales admissibles V_{S,max}.

Dans une étape 105, on assigne donc aux paramètres p(k+1) à l'instant k+1 les valeurs fixées p_{ref} des paramètres. En effet, une loi de commande statique est suffisante pour assurer un comportement satisfaisant du générateur 1, en respectant ses limites électriques de fonctionnement.

A l'inverse, si au moins dépassement est supérieur à 0, cela signifie qu'au moins une valeur électrique de sortie V_{S} est susceptible de ne pas de rester dans les limites des valeurs maximales admissibles V_{S,max}.

Si de telles valeurs de sortie cibles V_{S,cible} étaient effectivement utilisées pour piloter l'onduleur 2 (comme cela est le cas selon une loi de commande statique), le générateur 1 risquerait de se trouver en situation de surintensité ou de surtension, entrainant une dégradation de son fonctionnement. Une loi de commande statique est insuffisante pour assurer un comportement satisfaisant du générateur 1, en respectant ses limites électriques de fonctionnement.

Il est donc nécessaire d'optimiser les valeurs des paramètres p(k+1) à l'instant k+1 (étape 106).

Aussi, selon une étape 107, on modifie les valeurs des paramètres de la loi de commande 5. On détermine alors des valeurs modifiées pₒₚₜᵢₘ des paramètres de la loi de commande 5.

La détermination des valeurs modifiées pₒₚₜᵢₘ est avantageusement réalisée d'une part en minimisant la variation des valeurs modifiées pₒₚₜᵢₘ par rapport aux valeurs fixées p_{ref} de la loi de commande statique, et d'autre part en limitant tout dépassement des valeurs maximales admissibles V_{S,max}.

Selon une réalisation, la détermination des valeurs modifiées pₒₚₜᵢₘ peut par exemple être effectuée par résolution quadratique.

Selon cette réalisation, on cherche à minimiser une fonction de coût, par exemple telle que :
[Math. 5] ${\left‖\frac{{p}_{ref} - {p}_{optim}^{k + 1}}{{p}_{ref}}\right‖}^{2} + μ . \left[\begin{matrix}{ε}_{E} \\ {ε}_{i} \\ {ε}_{α}\end{matrix}\right] + β . {\left‖\frac{{p}_{optim}^{k + 1} - {p}_{optim}^{k}}{{p}_{ref}}\right‖}^{2}$

En outre, la condition visant à limiter tout dépassement des valeurs maximales admissibles V_{S,max} peut s'écrire de la façon suivante :
[Math. 6] $\left[\begin{matrix}{V}_{e} \left(k+1,{p}_{optim}\right) \\ {V}_{i} \left(k+1,{p}_{optim}\right) \\ {V}_{α} \left(k+1,{p}_{optim}\right)\end{matrix}\right] - \left[\begin{matrix}{ε}_{e} \\ {ε}_{i} \\ {ε}_{α}\end{matrix}\right] = {O}_{3 , 1}$

µ et β sont ont des valeurs fixes. µ permet de prendre en compte une erreur acceptable ε pour chaque valeur de sortie, afin de s'assurer que la minimisation converge vers une solution possible. β vise à s'assurer que les valeurs modifiées pₒₚₜᵢₘ^{k+1} à l'instant k+1 restent proches des valeurs modifiées pₒₚₜᵢₘ^{k} obtenues à l'instant k précédent.

ε_{E}, εᵢ, ε_{α} correspondent aux erreurs acceptables pour les dépassements Vₑ, Vᵢ, V_{α} selon la réalisation plus particulièrement décrite. Ces erreurs ε_{E}, εᵢ, ε_{α} sont avantageusement faibles, voire égales à 0.

Une fois les valeurs modifiées pₒₚₜᵢₘ obtenues, la loi de commande 5 peut comprendre ces valeurs modifiées pₒₚₜᵢₘ et permettre de déterminer des valeurs de sortie cibles V_{S,cible} permettant un pilotage adéquat du générateur 1.

Les étapes du procédé de commande peuvent ainsi être répétées, notamment de façon périodique. Plus particulièrement, les étapes du procédé sont répétées à des intervalles de temps réguliers, par exemple à une fréquence supérieure à 1kHz, voire à 5 kHz, voire de l'ordre de 6,66 KHz.

En variante, le procédé de commande en prenant en compte à chaque itération une fenêtre temporelle, la fenêtre temporelle étant ensuite décalée par glissement lors de chaque itération successive.

### Résultats expérimentaux

Les [Fig. 4] et [Fig. 5] présentent des résultats obtenus avec le procédé selon l'invention (à droite) comparé à un générateur virtuel utilisant uniquement une loi de commande de façon statique (à gauche) à la suite d'un court-circuit sur le réseau de distribution électrique.

Il apparait que le procédé selon l'invention permet d'éviter que des surtensions ou des surintensités se produisent, dépassant les valeurs maximales admissibles du générateur.

## Revendications

1. Procédé de commande d'un générateur (1) comprenant un onduleur (2) et une source d'énergie électrique (3), le générateur (1) étant configuré pour délivrer des valeurs électriques de sortie (V_{S}) à un réseau de distribution électrique, le générateur (1) étant piloté par une loi de commande (5), la loi de commande (5) comprenant un ensemble de valeurs fixées (p_{ref}) de paramètres pour modéliser le fonctionnement d'un générateur virtuel de sorte que la loi de commande (5) est configurée pour déterminer au moins une valeur de sortie cible (V_{S,cible}) qui doit être délivrée par le générateur (1) au réseau de distribution électrique, le procédé comprenant :
- déterminer au moins une valeur de sortie cible (V_{S,cible}) au moyen de la loi de commande (5) ;
- comparer la valeur de sortie cible (V_{S,cible}) avec au moins une valeur maximale admissible (V_{S,max}) du générateur (1) ; **caractérisé en ce que**
- si la valeur de sortie cible (V_{S,cible}) est supérieure à la valeur maximale admissible (V_{S,max}), déterminer une valeur modifiée (pₒₚₜᵢₘ) d'au moins un paramètre de la loi commande (5),
dans lequel le générateur (1) émule un générateur synchrone qui délivre un courant électrique dont la fréquence est déterminée par la vitesse de rotation d'un rotor par rapport à un stator, les paramètres de la loi de commande (5) étant choisis parmi une résistance statorique du stator (R_{α}), une inductance transitoire du stator sur l'axe direct (L'_{d}), une inductance permanente du stator sur l'axe direct (L_{d}), une inductance permanente du stator sur l'axe en quadrature (L_{q}) et un temps transitoire en boucle ouverte (T'_{do}) du générateur virtuel synchrone.

2. Procédé selon la revendication 1, dans lequel, si la valeur de sortie cible (V_{S,cible}) est inférieure ou égale à la valeur maximale admissible (V_{S,max}), conserver la valeur fixée (p_{ref}) du paramètre de la loi de commande (5).

3. Procédé selon l'une quelconque des revendications précédentes, dans lequel les étapes du procédé sont répétées de façon périodique, la loi de commande (5) comprenant lors de l'itération suivante k+1 du procédé la valeur déterminée (pₒₚₜᵢₘ) du paramètre lors de l'itération précédente k.

4. Procédé selon l'une quelconque des revendications précédentes, dans lequel les étapes du procédé sont répétées selon une fréquence supérieure à 1kHz, voire à 5 kHz.

5. Procédé selon l'une quelconque des revendications précédentes, dans lequel la valeur de sortie cible (V_{S,cible}) est déterminée au moyen de la loi de commande (5) en fonction d'au moins une valeur électrique de sortie (V_{S}) mesurée aux bornes du générateur (1).

6. Procédé selon l'une quelconque des revendications précédentes, dans lequel la détermination de la valeur modifiée (pₒₚₜᵢₘ) du paramètre est effectuée de sorte à minimiser un écart entre la valeur modifiée (pₒₚₜᵢₘ) et la valeur fixée (p_{ref}) dudit paramètre.

7. Procédé selon l'une quelconque des revendications précédentes, dans lequel la détermination de la valeur du paramètre modifiée (pₒₚₜᵢₘ) est effectuée de sorte à minimiser un écart entre les valeurs modifiées du paramètre obtenues lors de deux itérations successives k, k+1 des étapes du procédé.

8. Procédé selon l'une quelconque des revendications précédentes, dans lequel la valeur électrique de sortie (V_{S}) est choisie parmi une valeur d'intensité (I_{abc}), une valeur de tension (V_{abc}) et une valeur de fréquence (f_{abc}).

9. Procédé selon l'une quelconque des revendications précédentes, configuré pour contrôler la valeur électrique de sortie (V_{abc}) du générateur (1) lorsque de la survenance d'une instabilité sur le réseau de distribution électrique.

10. Programme d'ordinateur comprenant des instructions qui, lorsque le programme est exécuté par un processeur, conduisent à mettre en œuvre le procédé selon l'une des revendications 1 à 9.

11. Support d'enregistrement non transitoire lisible par un processeur sur lequel est enregistré un programme pour la mise en œuvre du procédé selon l'une des revendications 1 à 9.

12. Générateur (1) comprenant un onduleur (2) et une source d'énergie électrique (3), le générateur (1) étant configuré pour délivrer des valeurs électriques de sortie (V_{S}) à un réseau de distribution électrique, le générateur (1) étant piloté par une loi de commande (5), la loi de commande (5) comprenant un ensemble de valeurs fixées (p_{ref}) de paramètres pour modéliser le fonctionnement d'un générateur virtuel de sorte que la loi de commande (5) est configurée pour déterminer au moins une valeur de sortie cible (V_{S,cible}) qui doit être délivrée par le générateur (1) au réseau de distribution électrique, le générateur (1) comprenant un processeur configuré pour :
- déterminer au moins une valeur de sortie cible (V_{S,cible}) au moyen de la loi de commande (5) ;
- comparer la valeur de sortie cible (V_{S,cible}) avec au moins une valeur maximale admissible (V_{S,max}) du générateur (1) ; **caractérisé en ce que**
- si la valeur de sortie cible (V_{S,cible}) est supérieure à la valeur maximale admissible (V_{S,max}), déterminer une valeur modifiée (pₒₚₜᵢₘ) d'au moins un paramètre de la loi commande (5),
dans lequel le générateur (1) est configuré pour émuler un générateur synchrone qui délivre un courant électrique dont la fréquence est déterminée par la vitesse de rotation d'un rotor par rapport à un stator, les paramètres de la loi de commande (5) étant choisis parmi une résistance statorique du stator (R_{α}), une inductance transitoire du stator sur l'axe direct (L'_{d}), une inductance permanente du stator sur l'axe direct (L_{d}), une inductance permanente du stator sur l'axe en quadrature (L_{q}) et un temps transitoire en boucle ouverte (T'_{do}) du générateur virtuel synchrone.

13. Générateur (1) selon la revendication 12, configuré pour délivrer des valeurs électriques de sortie (V_{S}) à un micro réseau.

14. Générateur (1) selon la revendication 12 ou 13, dans lequel la source d'énergie électrique (3) est une source d'énergie renouvelable.

## Patentansprüche

1. Verfahren zur Steuerung eines Generators (1), der einen Wechselrichter (2) und eine Quelle elektrischer Energie (3) umfasst, wobei der Generator (1) dazu konfiguriert ist, einem Stromverteilungsnetz elektrische Ausgangswerte (V_{S}) bereitzustellen, wobei der Generator (1) durch ein Steuergesetz (5) gesteuert wird, wobei das Steuergesetz (5) eine Reihe von festgelegten Parameterwerten (p_{ref}) umfasst, um den Betrieb eines virtuellen Generators so zu modellieren, dass das Steuergesetz (5) dazu konfiguriert ist, mindestens einen Zielausgangswert (V_{S,cible}) zu bestimmen, der dem Stromverteilungsnetz von dem Generator (1) bereitzustellen ist, wobei das Verfahren umfasst:
- Bestimmen mindestens eines Zielausgangswerts (V_{S,cible}) mittels des Steuergesetzes (5);
- Vergleichen des Zielausgangswerts (V_{S,cible}) mit mindestens einem maximal zulässigen Wert (V_{S,max}) des Generators (1); **dadurch gekennzeichnet, dass**
- wenn der Zielausgangswert (V_{S,cible}) größer als der maximal zulässige Wert (V_{S,max}) ist, Bestimmen eines geänderten Werts (pₒₚₜᵢₘ) von mindestens einem Parameter des Steuergesetzes (5),
wobei der Generator (1) einen Synchrongenerator emuliert, der einen elektrischen Strom bereitstellt, dessen Frequenz durch die Drehzahl eines Rotors in Bezug auf einen Stator bestimmt wird, wobei die Parameter des Steuergesetzes (5) aus einem Statorwiderstand des Stators (R_{α}), einer transienten Induktivität des Stators auf der direkten Achse (L'_{d}), einer permanenten Induktivität des Stators auf der direkten Achse (L_{d}), einer permanenten Induktivität des Stators auf der Querachse (L_{q}) und einer Übergangszeit im offenen Regelkreis (T'_{do}) des virtuellen Synchrongenerators ausgewählt sind.

2. Verfahren nach Anspruch 1, wobei, wenn der Zielausgangswert (V_{S,cible}) kleiner oder gleich dem maximal zulässigen Wert (V_{S,max}) ist, der festgelegte Wert (p_{ref}) des Parameters des Steuergesetzes (5) beibehalten wird.

3. Verfahren nach einem der vorhergehenden Ansprüche, wobei die Verfahrensschritte periodisch wiederholt werden, wobei das Steuergesetz (5) bei der nächsten Iteration k+1 des Verfahrens den bei der vorherigen Iteration k ermittelten Wert (pₒₚₜᵢₘ) des Parameters umfasst.

4. Verfahren nach einem der vorhergehenden Ansprüche, wobei die Verfahrensschritte mit einer Frequenz von mehr als 1 kHz oder sogar 5 kHz wiederholt werden.

5. Verfahren nach einem der vorhergehenden Ansprüche, wobei der Zielausgangswert (V_{S,cible}) mittels des Steuergesetzes (5) in Abhängigkeit von mindestens einem an den Klemmen des Generators (1) gemessenen elektrischen Ausgangswert (V_{S}) bestimmt wird.

6. Verfahren nach einem der vorhergehenden Ansprüche, wobei die Bestimmung des geänderten Werts (pₒₚₜᵢₘ) des Parameters so durchgeführt wird, dass eine Abweichung zwischen dem geänderten Wert (pₒₚₜᵢₘ) und dem festgelegten Wert (p_{ref}) des Parameters minimiert wird.

7. Verfahren nach einem der vorhergehenden Ansprüche, wobei die Bestimmung des geänderten Werts des Parameters (pₒₚₜᵢₘ) so durchgeführt wird, dass eine Abweichung zwischen den geänderten Werten des Parameters minimiert wird, die bei zwei aufeinanderfolgenden Iterationen k, k+1 der Verfahrensschritte erhalten werden.

8. Verfahren nach einem der vorhergehenden Ansprüche, wobei der elektrische Ausgangswert (V_{S}) aus einem Stromstärkewert (l_{abc}), einem Spannungswert (V_{abc}) und einem Frequenzwert (f_{abc}) ausgewählt ist.

9. Verfahren nach einem der vorhergehenden Ansprüche, das zur Überwachung des elektrischen Ausgangswerts (V_{abc}) des Generators (1) bei Auftreten einer Instabilität im Stromverteilungsnetz konfiguriert ist.

10. Computerprogramm, das Anweisungen umfasst, die, wenn das Programm von einem Prozessor ausgeführt wird, dazu führen, dass das Verfahren nach einem der Ansprüche 1 bis 9 durchgeführt wird.

11. Prozessorlesbares, nicht-transientes Speichermedium, auf dem ein Programm zur Durchführung des Verfahrens nach einem der Ansprüche 1 bis 9 gespeichert ist.

12. Generator (1), der einen Wechselrichter (2) und eine Quelle elektrischer Energie (3) umfasst, wobei der Generator (1) dazu konfiguriert ist, einem Stromverteilungsnetz elektrische Ausgangswerte (V_{S}) bereitzustellen, wobei der Generator (1) durch ein Steuergesetz (5) gesteuert wird, wobei das Steuergesetz (5) eine Reihe von festgelegten Werten (p_{ref}) von Parametern umfasst, um den Betrieb eines virtuellen Generators so zu modellieren, dass das Steuergesetz (5) dazu konfiguriert ist, mindestens einen Zielausgangswert (V_{S,cible}) zu bestimmen, der dem Stromverteilungsnetz von dem Generator (1) bereitzustellen ist, wobei der Generator (1) einen Prozessor umfasst, der konfiguriert ist zum:
- Bestimmen mindestens eines Zielausgangswerts (V_{S,cible}) mittels des Steuergesetzes (5);
- Vergleichen des Zielausgangswerts (V_{S,cible}) mit mindestens einem maximal zulässigen Wert (V_{S,max}) des Generators (1); **dadurch gekennzeichnet, dass**
- wenn der Zielausgangswert (V_{S,cible}) größer als der maximal zulässige Wert (V_{S,max}) ist, Bestimmen eines geänderten Werts (pₒₚₜᵢₘ) von mindestens einem Parameter des Steuergesetzes (5),
wobei der Generator (1) dazu konfiguriert ist, einen Synchrongenerator zu emulieren, der einen elektrischen Strom bereitstellt, dessen Frequenz durch die Drehzahl eines Rotors in Bezug auf einen Stator bestimmt wird, wobei die Parameter des Steuergesetzes (5) aus einem Statorwiderstand des Stators (R_{α}), einer transienten Induktivität des Stators auf der direkten Achse (L'_{d}), einer permanenten Induktivität des Stators auf der direkten Achse (L_{d}), einer permanenten Induktivität des Stators auf der Querachse (L_{q}) und einer Übergangszeit im offenen Regelkreis (T'_{do}) des virtuellen Synchrongenerators ausgewählt sind.

13. Generator (1) nach Anspruch 12, der dazu konfiguriert ist, einem Mikronetz elektrische Ausgangswerte (V_{S}) bereitzustellen.

14. Generator (1) nach Anspruch 12 oder 13, wobei die Quelle elektrischer Energie (3) eine Quelle erneuerbarer Energie ist.

## Claims

1. A method for controlling a generator (1) comprising an inverter (2) and an electrical energy source (3), the generator (1) being configured to deliver electrical output values (V_{S}) to an electrical distribution grid, the generator (1) being driven by a control law (5), the control law (5) comprising a set of fixed values (p_{ref}) of parameters for modeling the operation of a virtual generator, so that the control law (5) is configured to determine at least one target output value (V_{S,target}) which is to be delivered by the generator (1) to the electrical distribution grid, the method comprising:
- determining at least one target output value (V_{S,target}) by means of the control law (5);
- comparing the target output value (V_{S,target}) with at least one maximum permissible value (V_{S,max}) of the generator (1); **characterized in that**
- if the target output value (V_{S,target}) is greater than the maximum permissible value (V_{S,max}), determining a modified value (pₒₚₜᵢₘ) of at least one parameter of the control law (5),
wherein the generator (1) emulates a synchronous generator which delivers an electrical current whose frequency is determined by the rotational speed of a rotor relative to a stator, the parameters of the control law (5) being selected from among a stator resistance of the stator (R_{α}), a transient inductance of the stator on the direct axis (L'_{d}), a permanent inductance of the stator on the direct axis (L_{d}), a permanent inductance of the stator on the quadrature axis (L_{q}) and an open-loop transient time (T'_{do}) of the synchronous virtual generator.

2. The method as claimed in claim 1, wherein, if the target output value (V_{S,target}) is lower than or equal to the maximum permissible value (V_{S,max}), the fixed value (p_{ref}) of the parameter of the control law (5) is retained.

3. The method as claimed in either of the preceding claims, wherein the steps of the method are repeated periodically, the control law (5) comprising during the next iteration k+1 of the method the value (pₒₚₜᵢₘ) of the parameter determined during the previous iteration k.

4. The method as claimed in any one of the preceding claims, wherein the steps of the method are repeated at a frequency greater than 1 kHz or even 5 kHz.

5. The method as claimed in any one of the preceding claims, wherein the target output value (V_{S,target}) is determined by means of the control law (5) as a function of at least one electrical output value (V_{S}) measured across the terminals of the generator (1).

6. The method as claimed in any one of the preceding claims, wherein the determination of the modified value (pₒₚₜᵢₘ) of the parameter is carried out so as to minimize a difference between the modified value (pₒₚₜᵢₘ) and the fixed value (p_{ref}) of said parameter.

7. The method as claimed in any one of the preceding claims, wherein the determination of the modified parameter value (pₒₚₜᵢₘ) is carried out so as to minimize a difference between the modified parameter values that are obtained during two successive iterations k, k+1 of the steps of the method.

8. The method as claimed in any one of the preceding claims, wherein the electrical output value (V_{S}) is selected from an intensity value (l_{abc}), a voltage value (V_{abc}) and a frequency value (f_{abc}).

9. The method as claimed in any one of the preceding claims, which is configured to control the electrical output value (V_{abc}) of the generator (1) when an instability occurs in the electrical distribution grid.

10. A computer program comprising instructions which lead to the method as claimed in any one of claims 1 to 9 being carried out when the program is executed by a processor.

11. A non-transitory storage medium readable by a processor, on which a program for implementing the method as claimed in one of claims 1 to 9 is stored.

12. A generator (1) comprising an inverter (2) and an electrical energy source (3), the generator (1) being configured to deliver electrical output values (V_{S}) to an electrical distribution grid, the generator (1) being driven by a control law (5), the control law (5) comprising a set of fixed values (p_{ref}) of parameters for modeling the operation of a virtual generator, so that the control law (5) is configured to determine at least one target output value (V_{S,target}) which is to be delivered by the generator (1) to the electrical distribution grid, the generator (1) comprising a processor configured to:
- determining at least one target output value (V_{S,target}) by means of the control law (5);
- compare the target output value (V_{S,target}) with at least one maximum permissible value (V_{S,max}) of the generator (1); **characterized in that**
- if the target output value (V_{S,target}) is greater than the maximum permissible value (V_{S,max}), determine a modified value (pₒₚₜᵢₘ) of at least one parameter of the control law (5),
wherein the generator (1) is configured to emulate a synchronous generator which delivers an electrical current whose frequency is determined by the rotational speed of a rotor relative to a stator, the parameters of the control law (5) being selected from among a stator resistance of the stator (R_{α}), a transient inductance of the stator on the direct axis (L'_{d}), a permanent inductance of the stator on the direct axis (L_{d}), a permanent inductance of the stator on the quadrature axis (L_{q}) and an open-loop transient time (T'_{do}) of the synchronous virtual generator.

13. The generator (1) as claimed in claim 12, configured to deliver electrical output values (V_{S}) to a microgrid.

14. The generator (1) as claimed in claim 12 or 13, wherein the electrical energy source (3) is a renewable energy source.
